# EUROPEAN PATENT APPLICATION

(11) **EP 3 451 252 A1**
(43) Date of publication of application: **06.03.2019**
(21) Application number: 17188714.4
(22) Date of filing: 31.08.2017
(51) Int. Cl.: G06Q 10/06, G06Q 10/10, G06Q 50/00

(54) **FULLY AUTOMATED, AI-GENERATED AND -TARGETED JOB ADS IN SOCIAL MEDIA**

(71) Applicant: Schöning, Andreas, 70176 Stuttgart (DE); Kroll, Lars Fabian, 70193 Stuttgart (DE); Schmidt, Willi, 70435 Stuttgart (DE)
(72) Inventor: Schöning, Andreas, 70176 Stuttgart (DE); Kroll, Lars Fabian, 70193 Stuttgart (DE); Schmidt, Willi, 70435 Stuttgart (DE)
(74) Representative: Meyer zu Bexten, Elmar

(57) **Abstract**

**Problem**

In the early 90s, it was quite easy to find enough staff. Recruiting was a simple game to play. Today, businesses have various problems in hiring. No matter of their size, they're not able to find the right people for their business.

The old "post and pray" game aims towards the actively searching people only active sourcing needs highly professional recruiters and lots of money.

A downside of conventional social recruiting approaches is their dependency on personal data whose collection and dissemination may raise data privacy concerns.

**Solution**

The problem is solved by a computer-implemented method (10) comprising loading a job from a job feed (11) and characterized in, if the job is to be promoted, a preparation or split (13) of job data pertaining to the job and an augmentation (22) of the job data by means of social networks (28), ultimately resulting in fully automated, Al-generated and -targeted job ads in social media. This so-called socialtelligence will close the gap between "post and pray" and "active sourcing" by automating exactly targeted job ads in social networks.

From a simple job description, we will automatically create ads, exactly define the right target groups and publish the ads to the right social network(s).

Businesses of all sizes benefit from perfect targeting, they will be able to reach new potential candidates who are not actively searching, and they will benefit from a time saving and a cost-effective way of recruiting.

## Description

### Technical Field

The invention relates to a process and products as per the first portion of the independent claims.

### Background Art

Recruitment or hiring is a core function of human resource management and encompasses the overall process of attracting, selecting, and appointing suitable candidates for permanent or temporary employment within an organization. The term may also refer to processes involved in choosing individuals for unpaid positions such as voluntary or trainee roles. Internet-based technologies to support all aspects of recruitment have become widespread.

In the context of recruitment, by sourcing is meant the use of one or more strategies to attract or identify candidates to fill job vacancies. This process stage may involve internal or external recruitment advertising or recruitment communications using digital media such as job portals or social networks. Recruitment advertisements typically have a uniform layout and contain elements such as a job title heading and location, an explanatory paragraph describing the employer and its brand, a description of the position, pictures, text, video, and any required entry qualifications on the side of the job seeker.

The possible use of social networking to communicate with potential stakeholders during a recruitment campaign is elucidated, for instance, in HENDERSON, Alison, et al. Authentic dialogue? The role of "friendship" in a social media recruitment campaign. Journal of Communication Management. 2010, vol.14, no.3, p.237-257. Patent Application Publication US 2014297550 A (CORNERSTONE ONDEMAND INC [US]) 02.10.2014 discloses systems, apparatus, and methods for generating a user profile interface based on skill information associated with a user.

### Summary of invention

The invention as claimed is hereinafter disclosed in such a way that the technical problem with which it deals can be appreciated and the solution can be understood.

### Technical Problem

A downside of conventional social recruiting approaches is their dependency on personal data whose collection and dissemination may raise data privacy concerns.

### Solution to Problem

The problem is solved as per the characterizing portion of the independent claims.

### Advantageous effect of invention

The invention allows for an establishment of target groups which can be addressed in social networks without the aid of personal data.

### Brief description of drawings

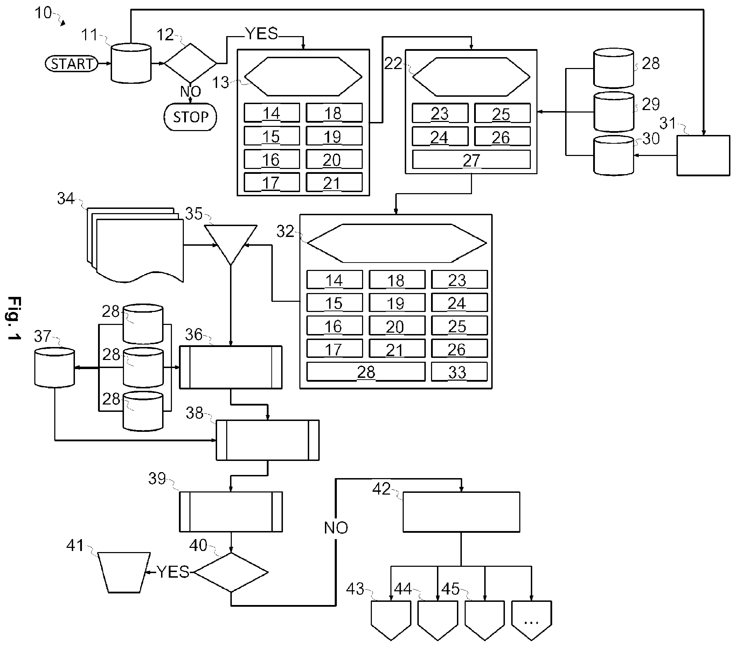

The sole figure is a flow sheet of a computer-implemented method as per the invention.

### Description of embodiments

According to the depicted method (10), an employer or recruitment agency loads jobs from a job feed (11), that is, a mechanism to receive updated job data from a data source usually associated with a client. Typically, such job data is structured by means of extensible mark-up language (XML) or comma-separated values (CSV). Alternatively, the content of a single job advertisement may be entered into the system by the customer, such as by field-specific input into a corresponding form.

If the client or agency finds that a job should be promoted (12), the pertinent job data is split into fields such as job title (14), short description (15), uniform resource locator (16), picture (17), location (18), age range (19), gender (20), or category (21) of the job. Based upon this preparation (13), the job data is augmented (22) by means of social networks (28), external databases (29), or other external repositories (30) -which in turn may be fed by language-processing (31) the job feed (11) -, thereby greatly widening the scope of the target group addressed by the promotion. For instance, similar jobs (23), qualifications (24), interests (25), industry sectors (26), or occupational titles (27) - unless readably available in a structured format - may be gathered from various social networks such as Linkedln® by means of a suitable application programming interface (API), wherein relevant fields are extracted in an automated process on the level of the metadata available in the social networks, databases, and repositories.

Once such enriched, the job data is formatted for a plurality of social networks (28), considering both the original as well as augmented fields along with any metadata (33) that may have been added in the process. Upon being merged (35) with customer master data (34), the preprocessed job data is subjected to a performance check (36). To this end, the agency collects and maintains historical data that allows for an estimate of the promotion's expected impact on the respective target audience. The social networks (28), historical performance data as well as external databases and repositories further feed (11) an artificial intelligence (AI) database (37) whose contents - in addition to the results of the performance check (36) - may be consulted to prepare (38) the final advertisements before ultimately committing (39) them to the target social networks (28) via a suitable API. In a preferred embodiment, the advertisement is sent to that network or those networks and in that display format that exhibits the highest performance probability.

In case the API should report an error (40) when committing the advertisements, the error report and data to which it refers are forwarded to an agent for manual investigation (41). If not, once the advertisements become active (42), their notification (43), billing (44), and reporting (45) may conclude the process.

### Industrial applicability

The invention is applicable, inter alia, throughout the advisory and consulting industry.

### Reference signs list

The following reference key lists each reference sign along with the designation of the feature which it indicates.
- 10: Method
- 11: Job feed
- 12: Promote job?
- 13: Data preparation or split, respectively
- 14: Job title
- 15: Short description
- 16: URL
- 17: Picture
- 18: Location
- 19: Age range
- 20: Gender
- 21: Job category
- 22: Augmentation of job data
- 23: Similar jobs
- 24: Qualifications
- 25: Interests
- 26: Industry sectors
- 27: Occupational titles
- 28: Social networks
- 29: External databases
- 30: External repositories
- 31: Language processing
- 32: Data formatting for social networks
- 33: Metadata
- 34: Customer master data
- 35: Merge
- 36: Performance check
- 37: AI database
- 38: Preparation of performance-optimized advertisements
- 39: Committal of advertisement data via API
- 40: Error report?
- 41: Check data
- 42: Advertisements are active
- 43: Notification
- 44: Billing
- 45: Reporting

### Citation list

The following literature is cited throughout this document.

### Patent literature

US 2014297550 A (CORNERSTONE ONDEMAND INC [US]) 02.10.2014

### Non-patent literature

HENDERSON, Alison, et al. Authentic dialogue? The role of "friendship" in a social media recruitment campaign. Journal of Communication Management. 2010, vol.14, no.3, p.237-257.

## Claims

1. Computer-implemented method (10) comprising loading a job from a job feed (11) or parsing a job description,
**characterized in**,
if the job is to be promoted (12),
a preparation or split (13) of job data pertaining to the job and
an augmentation (22) of the job data by means of social networks (28).

2. Method (10) as per Claim 1 wherein
the job data is further augmented by means of external databases (29) and external repositories (30) fed by language-processing (31) the job feed (11).

3. Method (10) as per any of the preceding claims wherein
the preparation or split (13) of the job data pertains to at least one of the following:
a job title (14),
a short description (15),
a uniform resource locator (16),
a picture (17),
a location (18),
an age range (19),
a gender (20),
a category (21) of the job.

4. Method (10) as per any of the preceding claims wherein
the job data is augmented with at least one of the following:
similar jobs (23),
qualifications (24),
interests (25),
industry sectors (26), and
occupational titles (27).

5. Method (10) as per any of the preceding claims wherein the job data is formatted for specific social networks (28), preferably merged (35) with customer master data (34), and subjected to a performance check (36) in view of historical data extracted from the social networks (28) and external sources such as databases or repositories.

6. Method (10) as per Claim 5 wherein,
based upon the performance check (36) and an artificial intelligence database (37) fed by the social networks (28) and external sources such as databases or repositories, advertisements are prepared (38) and
committed (39) to the social networks (28) via an application programming interface.

7. Method (10) as per Claim 6 wherein,
if the application programming interface reports an error (40) when committing the advertisements, the error is manually investigated (41).

8. Method (10) as per Claim 6 or Claim 7, further comprising,
upon the advertisements being active (42),
notification (43), billing (44), and reporting (45) of the advertisements.

9. Method (10) as per any of Claim 5 to Claim 8 wherein
the formatting of the job data comprises enriching the job data with
metadata (33).

10. Data processing apparatus having means for carrying out the method (10) of any of the preceding claims.

11. Computer program comprising instructions which, when the program is executed by a computer, cause the computer to carry out the method (10) of any of Claim 1 to Claim 12.

12. Computer-readable data carrier having stored thereon the computer program of Claim 11.

## Amended claims

### Amended claims in accordance with Rule 137(2) EPC.

1. Computer-implemented method (10) comprising
loading a job from a job feed (11) or parsing a job description,
**characterized in**,
if the job is to be promoted (12),
a preparation or split (13) of job data pertaining to the job and
an augmentation (22) of the job data by means of social networks (28) wherein the job data is formatted for specific social networks (28), preferably merged (35) with customer master data (34), subjected to a performance check (36) in view of historical data extracted from the social networks (28) and external sources such as databases or repositories and,
based upon the performance check (36) and an artificial intelligence database (37) fed by the social networks (28) and external sources, advertisements are prepared (38) and committed (39) to the social networks (28) via an application programming interface.

2. Method (10) as per Claim 1 wherein
the job data is further augmented by means of external databases (29) and external repositories (30) fed by language-processing (31) the job feed (11).

3. Method (10) as per any of the preceding claims wherein
the preparation or split (13) of the job data pertains to at least one of the following:
a job title (14),
a short description (15),
a uniform resource locator (16),
a picture (17),
a location (18),
an age range (19),
a gender (20),
a category (21) of the job.

4. Method (10) as per any of the preceding claims wherein
the job data is augmented with at least one of the following:
similar jobs (23),
qualifications (24),
interests (25),
industry sectors (26), and
occupational titles (27).

5. Method (10) as per any of the preceding claims wherein,
if the application programming interface reports an error (40) when committing the advertisements, the error is manually investigated (41).

6. Method (10) as per any of the preceding claims, further comprising, upon the advertisements being active (42),
notification (43), billing (44), and reporting (45) of the advertisements.

7. Method (10) as per any of the preceding claims wherein
the formatting of the job data comprises enriching the job data with metadata (33).

8. Data processing apparatus having means for carrying out the method (10) of any of the preceding claims.

9. Computer program comprising instructions which, when the program is executed by a computer, cause the computer to carry out the method (10) of any of Claim 1 to Claim 7.

10. Computer-readable data carrier having stored thereon the computer program of Claim 9.
